# EUROPEAN PATENT APPLICATION

(11) **EP 2 325 747 A2**
(43) Date of publication of application: **25.05.2011**
(21) Application number: 10251636.6
(22) Date of filing: 23.09.2010
(51) Int. Cl.: G06F 9/455

(54) **Virtual platform for prototyping system-on-chip designs**

(30) Priority: 05.11.2009 US 613414
(71) Applicant: Intel Corporation, Santa Clara, CA 95052 (US)
(72) Inventor: Chinya, Gautham N., Hillsboro, OR 97123 (US); Wang, Hong, Santa Clara, CA 95054 (US); Schuchman, Ethan, San Jose, CA 95110 (US)
(74) Representative: Beresford, Keith Denis Lewis

(57) **Abstract**

A system to prototype a system-on-chip design is presented. In one embodiment, the system includes an electronic board comprising a logic device programmable to emulate system components. The system further comprises a processor to execute a virtual machine monitor which redirects an input/output request to the system components via an interconnect.

## Description

### FIELD OF THE INVENTION

Embodiments of the invention relate to prototyping a system by emulating hardware models; more particularly, embodiments of the invention relate to emulating hardware models by programmable logic devices.

### BACKGROUND OF THE INVENTION

System-on-chip (SOC) designs are highly integrated complex heterogonous systems which include general purpose CPUs and intellectual property (IP) blocks such as accelerator cores, dedicated memories, and industry standard I/O fabrics. System design architects and software developers work together to evaluate and to optimize the full-system design so that power, performance, and area constraints are met.

Typically, IP blocks and system components are modeled in software for validation purposes. The interaction between each of the components and a processor is also modeled to emulate the behavior of the SOC design. IP blocks and corresponding software can also be verified, based on their intended usage, by using a prototyping system.

### BRIEF DESCRIPTION OF THE DRAWINGS

Embodiments of the present invention will be understood more fully from the detailed description given below and from the accompanying drawings of various embodiments of the invention, which, however, should not be taken to limit the invention to the specific embodiments, but are for explanation and understanding only.
**Figure 1** is a block diagram of a virtual platform for prototyping a system-on-chip (SOC) design, in accordance with one embodiment of the invention.
**Figure 2** is a block diagram of a system-on-chip (SOC) design including two IP blocks.
**Figure 3** is a flow diagram of one embodiment of a process to redirect memory access to IP blocks in a virtual platform.
**Figure 4** illustrates a computer system for use with one embodiment of the present invention.
**Figure 5** illustrates a point-to-point computer system for use with one embodiment

### DETAILED DESCRIPTION OF THE INVENTION

Embodiments of a system to prototype a system-on-chip design is presented. In one embodiment, the system includes an electronic board comprising a logic device programmable to emulate system components. The system further comprises a processor to execute a virtual machine monitor which redirects an input/output request to the system components via an interconnect.

In the following description, numerous details are set forth to provide a more thorough explanation of embodiments of the present invention. It will be apparent, however, to one skilled in the art, that embodiments of the present invention may be practiced without these specific details. In other instances, well-known structures and devices are shown in block diagram form, rather than in detail, in order to avoid obscuring embodiments of the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of present invention also relate to apparatuses for performing the operations herein. Some apparatuses may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, DVD-ROMs, and magnetic-optical disks, read-only memories (ROMs), random access memories (RAMs), EPROMs, EEPROMs, NVRAMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, embodiments of the present invention are not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; etc.

### Overview

Embodiments of a system to prototype a system-on-chip design is presented. In one embodiment, the system includes an electronic board comprising a logic device programmable to emulate system components. The system further comprises a processor to execute a virtual machine monitor which redirects an input/output request to the system components via an interconnect.

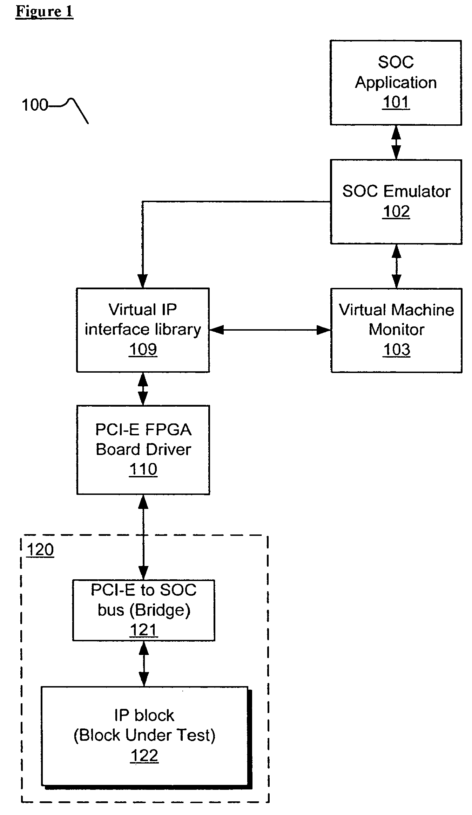

Figure 1 is a block diagram of a virtual platform for prototyping a system-on-chip (SOC) design, in accordance with one embodiment of the invention.

Referring to Figure 1, in one embodiment, a virtual platform includes virtual machine monitor (VMM) 103, virtual IP interface library 109, board driver 110, and electronic board 120. In one embodiment, electronic board 120 further includes bridge 121 and IP block 122. In one embodiment, an SOC design comprises models emulated in SOC emulator 102 and IP block 122. In one embodiment, SOC application 101 contains application and operating system as a software stack to be executed in conjunction with an SOC design.

In one embodiment, a virtual platform is a system level model that characterizes real system behaviors and preserves a programmer's view of the system under design (i.e., an SOC design).

In one embodiment, an SOC design includes a processor which executes an operating system and an application software stack. In one embodiment, the SOC design also includes other IP blocks for specialized processing. These IP blocks provide graphics acceleration, video encoding/decoding, and audio processing along with special I/O ports. In one embodiment, an SOC design includes components that are modeled in software and components that are prototyped on a field programmable gate array (FPGA).

In one embodiment, SOC emulator 102 includes a PC system that runs a virtual machine monitor, such as, for example, QEMU (Quick Emulator) and extensions thereof. In one embodiment, SOC emulator 102 communicates with IP block 122 via a virtual I/O interface. In one embodiment, SOC emulator 102 emulates models of a processor (e.g., a multi-core processor) and other components.

In one embodiment, SOC application 101 runs in conjunction with SOC emulator 102. In one embodiment, SOC application 101 controls IP block 122 via the virtual I/O comprising VMM 103 and virtual IP interface library 109. In one embodiment, SOC application 101 includes an operating system and application. In one embodiment, the operating system (SOC operating system) runs in a guest mode within a virtual machine created and managed by VMM 103.

In one embodiment, VMM 103 includes a layer of software that virtualizes access to IP block 122, such that IP block 122 is logically interconnected with other components of an SOC design. In one embodiment, VMM 103 enables a guest operating system to access virtual platform components. In one embodiment, VMM 103 processes configurations of a host system and a virtual SOC platform being emulated. In one embodiment, VMM 103 is executed by a processor that supports virtual machine extension (VMX) features.

In one embodiment, VMM 103 arbitrates usage of resources among multiple operating systems so that the operating systems are able to share the resources in a single computing system. In one embodiment, VMM 103 supports running operating systems and application software stacks in a container referred to as a virtual machine (VM).

In one embodiment, IP block 122 supports programmed I/O, memory mapped I/O, or both. In one embodiment, control registers of IP block 122 are mapped to specific locations in computer memory based on a system memory address map or an I/O address map. In one embodiment, the system memory address map is preserved so that software drivers that utilize IP block 122 remain unaltered even when the drivers are deployed to a physical SOC. In one embodiment, a same software stack is able to run on a physical SOC design without modification.

In one embodiment, VMM 103 monitors access to addresses (e.g., memory address and I/O address) associated with IP block 122. In one embodiment, VMM 103 detects when an application software stack running therein interacts with IP block 122. VMM 103 captures those interactions and redirects the interactions to IP block 122.

In one embodiment, interrupt events resulting from processing in IP block 122 are relayed to the software programs running in the virtual machine by VMM 103. In one embodiment, IP block 122 supports interrupt events to a processor to indicate task completion or error. In one embodiment, bridge 121 converts interrupt signals into interrupt events. VMM 103 then propagates the events to SOC emulator 102.

In one embodiment, IP block 122 is a design, from an internal/external source, to be to be used to build a reference platform. In one embodiment, IP block 122 is synthesized and downloaded to an FPGA on electronic board 120. In one embodiment, IP block 122 is synthesized from hardware modeling language, such as, for example, SystemC, Verilog, and VHDL.

In one embodiment, IP block 122, without necessary modification, is able to communicate with a PCI-E device by using bridge 121. IP block 122 connects to the PCI-E endpoint via bridge 121 that translates PCI-E accesses to native transactions (e.g., Advanced Microcontroller Bus Architecture (AMBA), Customized Data Memory Interface (CDMI), and Open Core Protocol (OCP) protocols) that IP block 122 supports. In one embodiment, bridge 121 is also referred to as a PCI-E to SOC bus. In one embodiment, bridge 121 also supports direct memory access (DMA) transfers by moving data to and from a host system.

In one embodiment, electronic board 120 is an FPGA add-on card that connects to a host system via a PCI-E interconnect. In one embodiment, electronic board 120 includes more than one FPGA. In one embodiment, a host system includes several different FPGA boards (cards) on which multiple IP blocks are emulated. In one embodiment, IP blocks of different functionalities are emulated by using on different FPGA cards.

In one embodiment, IP blocks of a SOC design include software models in SOC emulator 102, emulated models by using an FPGA, or both. The IP blocks communicate with each others in conjunction with virtual IP interface library 109 and VMM 103.

In one embodiment, a virtual platform is used for software development, software validation, and SOC designs prototyping. In one embodiment, a virtual platform supports testing an application software stack that uses IP block 122.

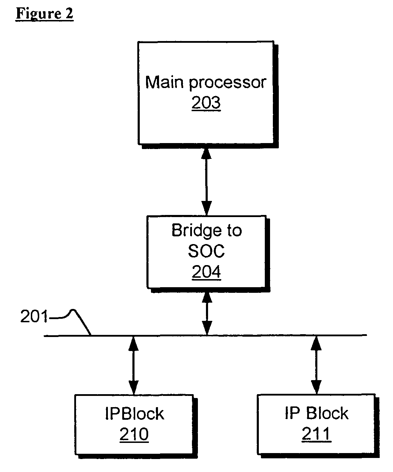

Figure 2 is a block diagram of a system-on-chip (SOC) design including two IP blocks.

Referring to Figure 2, in one embodiment, an SOC design includes main processor 203, bridge 204, and two IP blocks (i.e., IP block 210 and IP block 211). In one embodiment, IP blocks 210-211 are coupled to main processor 203 via SOC bus 201. Main processor 203 is coupled to SOC bus 201 via bridge 204.

In one embodiment, SOC bus 201 is in accordance with an interconnect standard, such as, for example, Advanced Microcontroller Bus Architecture (AMBA), Customized Data Memory Interface (CDMI), and Open Core Protocol (OCP).

In one embodiment, bridge 204 interconnects SOC bus 201 to main processor 203 so that IP blocks 210-211 supports only communication in accordance with SOC bus 201. In one embodiment, IP blocks 210-211 and bridge 204 are emulated on an FPGA.

In one embodiment, IP blocks 210-211 includes a set of control registers and local memory that holds the programs to be executed on IP blocks 210-211. The control registers and the local memory are exposed to main processors 203 by assigning specific address ranges to be associated with corresponding control registers and the local memory. In one embodiment, a software layer controls IP blocks 210-211 by reading from and writing to address ranges. In one embodiment, a system address map defines a logical interconnection of IP blocks 210-211 to the rest of the system. In one embodiment, the address space is defined statically or dynamically.

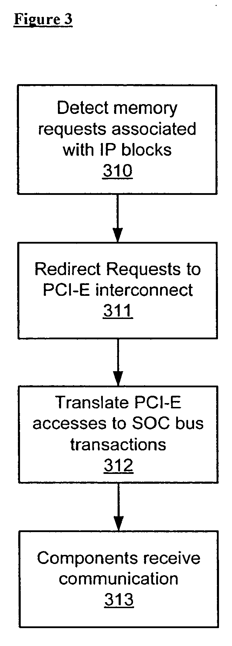

Figure 3 is a flow diagram of one embodiment of a process to redirect memory access to IP blocks in a virtual platform.

The process is performed by processing logic that may comprise hardware (circuitry, dedicated logic, etc.), software (such as is run on a general purpose computer system or a dedicated machine), or a combination of both. In one embodiment, the process is performed in conjunction with virtual machine monitor 103 with respect to Figure 1. In one embodiment, the process is performed by a computer system with respect to Figure 3.

Referring to Figure 3, the process begins by processing logic detects memory requests of a specific memory ranges reserved for use to communicate with IP blocks emulated on programmable logic devices (process block 310). In one embodiment, processing logic detects the memory request or memory addresses associated with IP blocks. In one embodiment, the programmable logic devices are field programmable gate arrays (FPGAs) on an electronic board connected to a host system via a PCI-E interconnect.

In one embodiment, processing logic redirects such memory requests to a PCI-E interconnect (process block 311). In one embodiment, processing logic performs the memory redirection in conjunction with a virtual machine extension supported by a processor.

In one embodiment, processing logic translates PCI-E accesses to system-on-chip (SOC) bus transactions (process block 312).

In one embodiment, an IP block receives memory requests via the SOC bus (process block 313). In one embodiment, processing logic relays interrupts events raised by IP blocks to a host system on which a SOC design is emulated.

Embodiments of the invention may be implemented in a variety of electronic devices and logic circuits. Furthermore, devices or circuits that include embodiments of the invention may be included within a variety of computer systems. Embodiments of the invention may also be included in other computer system topologies and architectures.

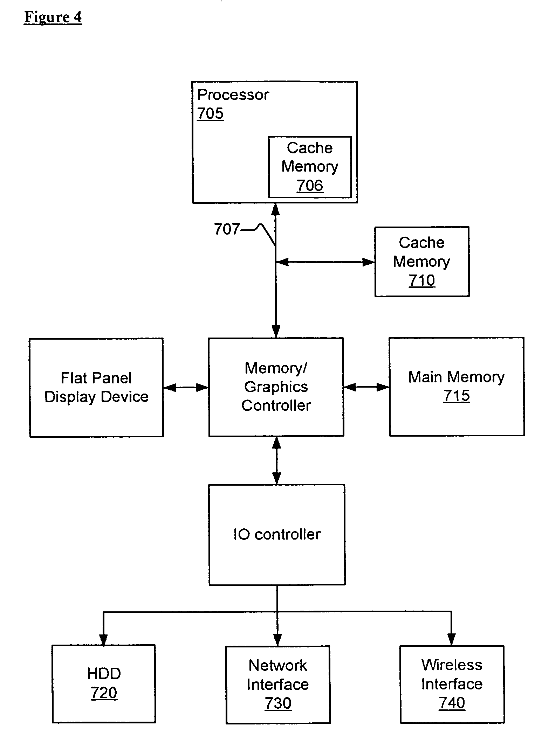

Figure 4, for example, illustrates a computer system in conjunction with one embodiment of the invention. Processor 705 accesses data from level 1 (L1) cache memory 706, level 2 (L2) cache memory 710, and main memory 715. In other embodiments of the invention, cache memory 706 may be a multi-level cache memory comprise of an L1 cache together with other memory such as an L2 cache within a computer system memory hierarchy and cache memory 710 are the subsequent lower level cache memory such as an L3 cache or more multi-level cache. Furthermore, in other embodiments, the computer system may have cache memory 710 as a shared cache for more than one processor core.

Processor 705 may have any number of processing cores. Other embodiments of the invention, however, may be implemented within other devices within the system or distributed throughout the system in hardware, software, or some combination thereof.

Main memory 715 may be implemented in various memory sources, such as dynamic random-access memory (DRAM), hard disk drive (HDD) 720, solid state disk 725 based on NVRAM technology, or a memory source located remotely from the computer system via network interface 730 or via wireless interface 740 containing various storage devices and technologies. The cache memory may be located either within the processor or in close proximity to the processor, such as on the processor's local bus 707. Furthermore, the cache memory may contain relatively fast memory cells, such as a six-transistor (6T) cell, or other memory cell of approximately equal or faster access speed.

Other embodiments of the invention, however, may exist in other circuits, logic units, or devices within the system of Figure 4. Furthermore, in other embodiments of the invention may be distributed throughout several circuits, logic units, or devices illustrated in Figure 4.

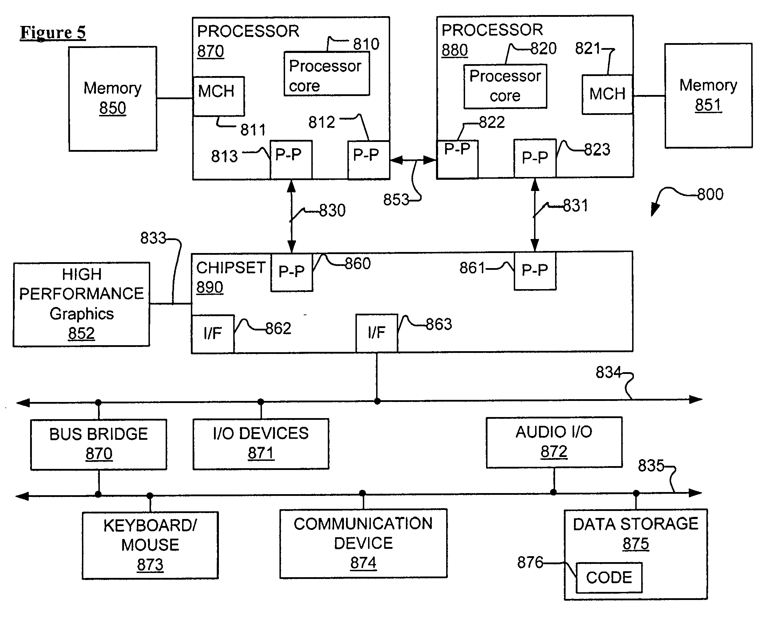

Similarly, at least one embodiment may be implemented within a point-to-point computer system. Figure 5, for example, illustrates a computer system that is arranged in a point-to-point (PtP) configuration. In particular, Figure 5 shows a system where processors, memory, and input/output devices are interconnected by a number of point-to-point interfaces.

The system of Figure 5 may also include several processors, of which only two, processors 870, 880 are shown for clarity. Processors 870, 880 may each include a local memory controller hub (MCH) 811, 821 to connect with memory 850, 851. Processors 870, 880 may exchange data via a point-to-point (PtP) interface 853 using PtP interface circuits 812, 822. Processors 870, 880 may each exchange data with a chipset 890 via individual PtP interfaces 830, 831 using point to point interface circuits 813, 823, 860, 861. Chipset 890 may also exchange data with a high-performance graphics circuit 852 via a high-performance graphics interface 862. Embodiments of the invention may be coupled to computer bus (834 or 835), or within chipset 890, or coupled to data storage 875, or coupled to memory 850 of Figure 5.

Other embodiments of the invention, however, may exist in other circuits, logic units, or devices within the system of Figure 5. Furthermore, in other embodiments of the invention may be distributed throughout several circuits, logic units, or devices illustrated in Figure 5.

The invention is not limited to the embodiments described, but can be practiced with modification and alteration within the spirit and scope of the appended claims. For example, it should be appreciated that the present invention is applicable for use with all types of semiconductor integrated circuit ("IC") chips. Examples of these IC chips include but are not limited to processors, controllers, chipset components, programmable logic arrays (PLA), memory chips, network chips, or the like. Moreover, it should be appreciated that exemplary sizes/models/values/ranges may have been given, although embodiments of the present invention are not limited to the same. As manufacturing techniques (e.g., photolithography) mature over time, it is expected that devices of smaller size could be manufactured.

Whereas many alterations and modifications of the embodiment of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

## Claims

1. An apparatus comprising:
a processor to perform an emulation of a first component of a system design;
an interconnect, coupled to the processor, to communicate with a first programmable logic device to emulate a second component of the system design; and
a virtual machine monitor to redirect an input/output request by the first component to the second component via the interconnect.

2. The apparatus of claim 1, wherein the virtual machine monitor is operable to redirect a memory request associated with the second component by monitoring memory addresses associated with the second component.

3. The apparatus of claim 1, wherein the processor supports execution of the virtual machine monitor in conjunction with virtual machine extensions.

4. The apparatus of claim 1, wherein the first programmable logic device includes a field-programmable gate arrays, FPGA, or a complex programmable logic device, CPLD.

5. The apparatus of claim 1, wherein the first programmable logic device further emulates a third component of the system design based on a hardware description language, HDL, model.

6. The apparatus of claim 1, further comprising a second programmable logic device to emulate a plurality of components of the system design.

7. The apparatus of claim 1, wherein the virtual machine monitor is operable to receive interrupt events raised by the second component and to relay the interrupt event to the processor.

8. The apparatus of claim 1, further comprising a PCI-E bridge to support communication between the interconnect and a system-on-chip, SOC, bus emulated by the first programmable logic device, wherein the second component is logically coupled to the SOC bus.

9. A system comprising apparatus as claimed in any preceding claim, further comprising;
a first electronic board, coupled to the interconnect, comprising the first programmable logic device to emulate one or more components of a design; and
the processor, coupled to the interconnect, being adapted to execute a virtual machine monitor which redirects an input/output request to the one or more components via the interconnect.

10. The system of claim 9, wherein the virtual machine monitor is operable to redirect a memory request associated with the one or more components by monitoring memory addresses associated with the one or more components.

11. The system of claim 9, further comprising a second electronic board including one or more programmable logic devices to emulate a plurality of components of the design.

12. A method comprising:
detecting an input/output request to access a plurality of memory addresses; and
redirecting, by a virtual machine monitor, the input/output request to one or more components emulated by a programmable logic device.

13. The method of claim 12, further comprising receiving, by the virtual machine monitor, an interrupt event from the one or more components.

14. The method of claim 12, wherein the programmable logic device includes a field-programmable gate arrays, FPGA, or a complex programmable logic device, CPLD.

15. The method of claim 12, wherein the plurality of memory addresses are associated with the one or more components.
